# EUROPÄISCHE PATENTSCHRIFT

(11) **EP 0 993 596 B1**
(45) Veröffentlichungstag und Bekanntmachung des Hinweises auf die Patenterteilung: **06.11.2002**
(21) Anmeldenummer: 98905257.6
(22) Anmeldetag: 14.01.1998
(51) Int. Cl.: G01L 23/22, G01P 15/09, G01H 11/08, G01D 11/30

(54) **SCHWINGUNGSAUFNEHMER MIT DRUCKHÜLSE**
VIBRATION PICKUP WITH PRESSURE SHEATH
CAPTEUR D'OSCILLATIONS A DOUILLE DE PRESSION

(30) Priorität: 30.06.1997 DE 19727703
(43) Veröffentlichungstag der Anmeldung: 19.04.2000
(73) Patentinhaber: ROBERT BOSCH GMBH, 70442 Stuttgart (DE)
(72) Erfinder: BRAMMER, Hartmut, D-71665 Vaihingen (DE); HACKEL, Uwe, D-70839 Gerlingen (DE); FRIES, Romuald, D-71287 Weissach (DE); KREBS, Holger, D-71729 Erdmannhausen (DE)
(86) Internationale Anmeldenummer: DE9800110
(87) Internationale Veröffentlichungsnummer: WO99001732

(56) Entgegenhaltungen:
- DE-A- 4 011 910
- DE-A- 19 612 540
- PATENT ABSTRACTS OF JAPAN vol. 009, no. 016 (P-329), 23.Januar 1985 & JP 59 164921 A (NIPPON JIDOSHA BUHIN SOGO KENKYUSHO KK;OTHERS: 01), 18.September 1984,

## Beschreibung

### Stand der Technik

Die Erfindung betrifft einen Schwingungsaufnehmer mit einer Druckhülse.

Es ist bereits in der DE-OS 44 03 660 ein Schwingungsaufnehmer mit einer Druckhülse beschrieben, der als Klopfsensor für die Überwachung der Funktion eines Verbrennungsmotors.in einem Kraftfahrzeug verwendet wird. Diese Druckhülse wird über einen Auflagebereich fest an das die Schwingungen verursachende Bauteil, hier an den Motorblock, angefügt. Die zu detektierenden Schwingungen sind Klopfgeräusche des Verbrennungsmotors im Betrieb, die über die Druckhülse auf eine piezokeramische Scheibe als eigentliches Sensorelement geleitet und damit in ein auswertbares elektrisches Ausgangssignal umgewandelt werden.

Die Art der Anbringung, bzw. der Einspannung dieses Sensorelements an der Druckhülse und die Befestigung der Druckhülse am schwingenden Bauteil hat hier großen Einfluß auf die Herstellungsweise. Die Einspannung des Sensorelements mitsamt einer Vielzahl von Einzelteilen, z.B. mit einer Feder und einer seismischen Masse, erfolgt bei diesem bekannten Schwingungsaufnehmer mit relativ aufwendigen Herstellungsschritten.

In der Schrift DE-A 19 612 540 ist ein Schwingungsaufnehmer als Klopfsensor für einen Verbrennungsmotor mit einem Gehäuse offenbart, in dem eine Druckhülse angeordnet ist, die mit ihrer unteren Auflagefläche auf einem Gehäuse des Motors befestigt ist. Hierbei sollen die Schwingungen des Motors dedektiert werden. Ferner ist am Außenumfang der Druckhülse ausgehend von der unteren Auflagefläche eine Isolierscheibe, eine Kontaktscheibe, eine piezokeramische Scheibe als Detektionsmittel und darüber wiederum eine weitere Kontaktscheibe sowie erneut eine Isolierscheibe angeordnet. Auf diese Anordnung ist eine seismische Masse aufgesetzt, die mit einer Tellerfeder und einen darüber aufgeschraubten Gewindering in Richtung der seismischen Masse und der piezokeramischen Scheibe eine Vorspannung erzeugt. In einem integrierten Anschlussteil 10 des aus Kunststoff bestehenden Gehäuses ist ein Anschlusskabel eingespritzt. Die Leiter des Anschlusskabels sind mit den beiden Kontaktscheiben an den beiden Seiten der piezokeramischen Scheibe angeschlossen und übertragen die elektrische Spannung, die bei einer Druckbeanspruchung der piezokeramischen Scheibe erzeugt wird. Ferner ist aus dem Dokument DE-A-40 11 910 ein piezoelektrischer Aufnehmer zur Messung von Schwingungen an Brennkraftmotoren bekannt. Hierbei werden die seismischen Massen aus Messing und die scheibenförmigen Piezoelemente mittels einer Tellerfeder unter einer Vorspannung gegeneinander zusammengehalten. Der elektrische Kontakt für den Abgriff des piezoelektrischen Effekts befindet sich auf der Tellerfeder. In keiner der beiden Schriften weist die seismische Masse ein Innengewinde auf sondern wird mit Hilfe eines separaten Spannmittels gehalten und vorgespannt.

### Vorteile der Erfindung

Der erfindungsgemäße Schwingungsaufnehmer der oben angegebenen Art ist mit den Merkmalen des Anspruchs 1 insbesondere dadurch vorteilhaft, daß beim Zusammenfügen der Einzelteile zum Eispannen des Sensorelements auf eine separate Tellerfeder zur Erzeugung einer axialen Vorspannung verzichtetet werden kann. Da die Kontaktscheiben, die zur Herstellung des elektrischen Kontakts an den axialen Flächen des piezokeramischen Sensorelements anliegen, schon tellerfederartig gestaltet sind, entfällt die Notwendigkeit einer separaten Herstellung und Montage einer Tellerfeder.

Auf einfache Weise lassen sich die Kontaktscheiben aus einem Blechteil so ausstanzen, dass eine radial verlaufende Verwölbung, bzw. Schräge oder Steigung der Kontaktscheiben den federnden Effekt hervorruft. Beim Ausstanzen kann jeweils in vorteilhafter Weise auch ein Stecker zum Anschluss eines Verbindungskabels an die Kontaktscheibe mit vorgesehen werden, wodurch dieser von vorn herein einstückig mit der jeweiligen Kontaktscheibe ist und somit auch ein aufwendiger Montageschritt für die elektrische Verbindung dieser Teile entfällt.

Der erfindungsgemäße Schwingungsaufnehmer ist somit in weniger Montageschritten mit einer reduzierten Teilezahl herstellbar, wodurch spezielle Werkzeuge zum Anbringen einer Tellerfeder und gegebenenfalls separate angelötete oder angeschweißte Kontaktstecker überflüssig sind. Es werden hierdurch nicht nur Fertigungskosten und Fertigungszeiten eingespart, sondern es wird auch die Fertigungssicherheit durch den vereinfachten Aufbau erhöht.

Bei der besonders vorteilhaften Ausführungsform kann auf einen separaten Gewindering oder ein sonstiges Befestigungsmittel, mit dem die seismische Masse eingespannt wird, verzichtet werden. Hier ist die seismische Masse selbst mit einem Innengewinde und gegebenenfalls mit einem äußeren Sechskant ausgestattet, so dass hiermit die Einspannung selbst vorgenommen werden kann. Es ist so eine weitere Reduzierung der Teilezahl, der Fertigungstaktzeiten und des Gewichts bei hoher Fertigungsqualität und Fertigungssicherheit möglich.

Weitere vorteilhafte Ausführungsformen sind in den abhängigen Ansprüchen angegeben.

### Zeichnung

Beispiele des Schwingungsaufnehmers mit einer Druckhülse werden anhand der Zeichnung erläutert. Es zeigen:
Figur 1 eine Schnitt durch ein Klopfsensorgehäuse als Schwingungsaufnehmer mit einer tellerfederartigen Kontaktscheibe, wobei dieses Beispiel das Verständnis der Erfindung erleichtern soll;
Figur 2 einen Schnitt durch die Kontaktscheibe nach Figur 1;
Figur 3 eine Draufsicht auf die Kontaktscheibe nach Figur 1 und
Figur 4 einen Schnitt durch einen Klopfsensor mit einer ein Innengewinde aufweisenden seismischen Masse.

### Beschreibung

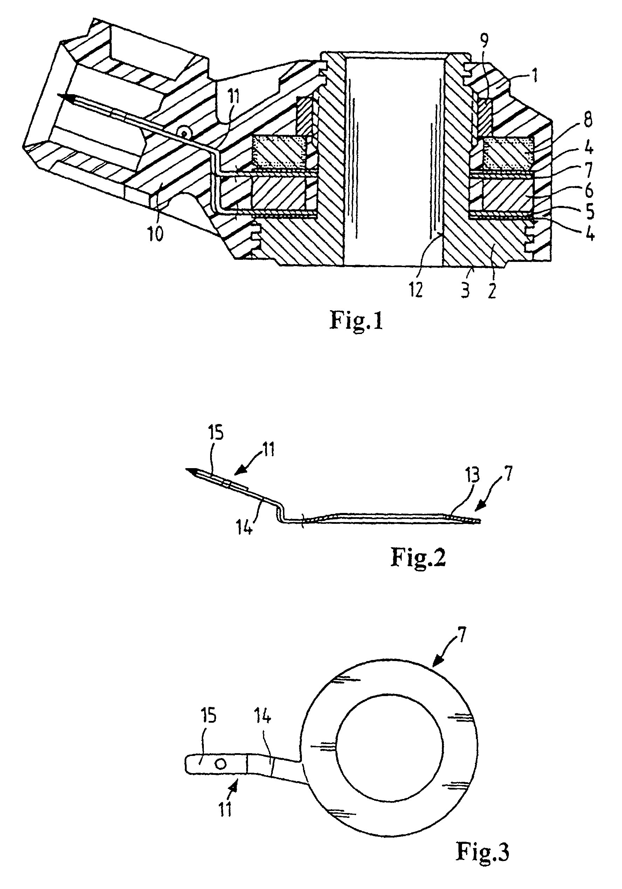

In der Figur 1 ist als Schwingungsaufnehmer ein Klopfsensor für einen Verbrennungsmotor mit einem äußeren Kunststoffgehäuse 1 dargestellt, in dem eine Druckhülse 2 angeordnet ist, die mit ihrer unteren Fläche 3 auf dem hier nicht dargestellten Motorblock, dessen Schwingungen detektiert werden sollen, aufliegt. Am Außenumfang der Druckhülse 2 sind, ausgehend vom unteren Rand, folgende Teile angeordnet: eine Isolierscheibe 4, eine erste Kontaktscheibe 5, eine piezokeramische Scheibe 6 als eigentliches Sensorelement und darüber wiederum eine zweite Kontaktscheibe 7 sowie eine weitere Isolierscheibe 4. Auf diese Anordnung ist eine seismische Masse 8 aufgesetzt, die mit einem schraubbaren oder auf sonstige Weise befestigbaren Ring 9 in Richtung der piezokeramischen Scheibe 6 gedrückt wird.

In einem integrierten Anschlußteil 10 des insbesondere in einem Kunststoff-Spritzgußverfahren hergestellten Gehäuses 1 ist ein elektrischer Anschluss 11 für die Kontaktscheiben 5 eingespritzt. Der elektrische Anschluss 11 ist hier einstückig mit der jeweiligen Kontaktscheibe 5 oder 7 hergestellt. Es besteht somit über die beiden Kontaktscheiben 5 und 7 eine elektrische Verbindung zu den beiden Seiten der piezokeramischen Scheibe 6. An den Anschlüssen 11 ist die elektrische Spannung, die bei einer Druckbeanspruchung der piezokeramischen Scheibe 6 erzeugt wird, abnehmbar.

Durch eine zentrale Ausnehmung, bzw. eine Bohrung 12 in der Druckhülse 2 ragt eine hier nicht dargestellte Befestigungsschraube, mit welcher insgesamt dieser Klopfsensor mittel- oder unmittelbar am Motorblock des Verbrennungsmotors befestigbar ist.

Anhand Figur 2 und Figur 3 ist die zweite Kontaktscheibe 7 beispielhaft auch für die erste Kontaktacheibe 5 gezeigt. Die Kontaktscheibe 7 ist ebenso wie die Kontaktscheibe 5 mit einer radial verlaufenden Schräge 13 versehen, die dazu führt, dass die jeweilige Kontaktscheibe 5 oder 7 jeweils nur radial innen oder außen an der piezokeramischen Scheibe 6 anliegt und korrespondierend dazu an der jeweils anderen Seite an den jeweils gegenüberliegenden Isolierscheiben 4 anliegt. Die Kontaktscheiben 5 und 7 sind also jeweils mit einer vorgegebenen Federwirkung zwischen diese Teile eingespannt. Aus der Figur 3 ist zu erkennen, dass die Kontaktscheibe 7 so aus einem Blechteil ausgestanzt ist, dass sich einstückig mit der Kontaktscheibe 7 ein Steg 14 ausbildet, der an seinem Ende durch Umfalzen weiterer Blechsegmente eine steckerartige Verdickung 15 für die Funktion als steckerartiger Anschluss 11 trägt. Die Kontaktscheibe 5 ist mit entsprechend angepassten Abmessungen des Stegs 14 in gleicher Weise hergestellt.

Bei der Montage des Klopfsensors wird das gesamte, von der oben beschriebenen Befestigungsschraube für die Montage auf dem Motorblock, ausgeübte Drehmoment auf die Druckhülse 2 über die untere Fläche 3 übertragen, d.h. auf die piezokeramischen Scheibe 6 als Sensorelement wirkt durch die Befestigung keine Kraft.

Eine Vorspannkraft wirkt hier durch den Druck der tellerfederartigen Kontaktscheiben 5 und 7 bei der Montage des Ringes 9. Die Vorspannkraft ist so gewählt, daß an der piezokeramischen Scheibe 6 gerade noch ohne bleibende Verschlechterung des elektrischen Signals ertragbare Axialkräfte wirksam sind und diese auch von thermischen Dehnungen sowie unvermeidlichen Stauchungen der Druckhülse 2 bei der Montage weitestgehend unabhängig ist. Die von der seismischen Masse 8 proportional zu den Schwingungen des Verbrennungsmotors ausgeübten Impulse werden in der piezokeramischen Scheibe 6 in Spannungsimpulse umgewandelt, die an einem entsprechenden Meßgerät ablesbar sind.

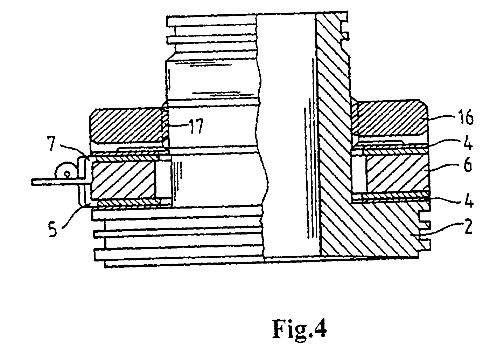

Bei der Ausführung nach Figur 4 sind die jeweils mit den anhand der Figuren 1 bis 3 beschriebenen Bauelemente funktionsgleichen Teile mit den gleichen Bezugszeichen versehen. Eine seismische Masse 16 nach der Figur 4 besitzt ein Innengewinde 17 über das sie direkt auf die Druckhülse 2 aufgeschraubt werden kann und dabei das Sensorelement 6 zwischen die federnden Kontaktscheiben 5 und 7 einspannt. Zur Vereinfachung der Montage kann dabei außen auf der seismischen Masse 16 noch ein Sechskant vorgesehen werden. Die Kontaktscheiben 5 und 7 sind in gleicher Weise ausgeführt und symmetrisch zueinander angeordnet, wodurch die Herstellung weiter vereinfacht ist.

## Patentansprüche

1. Schwingungsaufnehmer mit einer Druckhülse, bei dem die Druckhülse (2) über eine mittel- oder unmittelbare Befestigung auf einem Schwingungen verursachenden Bauteil anbringbar ist und mit einem Sensorelement (6), das radial außen an der Druckhülse (2) unter einer axialen Vorspannung gehalten ist und das über Kontaktscheiben (5, 7) und ein Anschlußteil (11) elektrisch kontaktierbar ist, wobei mindestens eine der Kontaktscheiben (5, 7) ein mit einer radialen Schräge (13) versehenes Blechteil ist, so daß die mindestens eine Kontaktscheibe (5, 7) tellerfederartig zur Erzeugung der axialen Vorspannung zwischen dem Sensorelement (6) und den axial angrenzenden Teilen zu liegen kommt, wobei die seismische Masse (16) mit einem Innengewinde (17) versehen ist und direkt zur Einspannung des Sensorelements (6) auf die Druckhülse (2) aufschraubbar ist.

2. Schwingungsaufnehmer nach Anspruch 1, **dadurch gekennzeichnet, daß**
- die mindestens eine Kontaktscheibe (5,7) aus einem Blech ausgestanzt ist und mit der radialen Schräge (13) versehen ist.

3. Schwingungsaufnehmer nach Anspruch 2, **dadurch gekennzeichnet, dass**
- die mindestens eine Kontaktscheibe (5,7) einstückig mit einem Steg (14) aus dem Blech ausgestanzt ist, wobei der Steg (14) an seinem von der jeweiligen Kontaktscheibe (5,7) abgewandten Ende eine Verdickung (15) für eine Funktion als steckerartiger Anschluss (11) aufweist.

4. Schwingungsaufnehmer nach Anspruch 3, **dadurch gekennzeichnet, dass**
- die Verdickung durch Umfalzen von Blechsegmenten herstellbar ist.

5. Schwingungsaufnehmer nach einem der Ansprüche 3 oder 4, **dadurch gekennzeichnet, dass**
- beide Kontaktscheiben (5,7) gleich ausgeführt sind und symmetrisch derart zueinander angeordnet sind, dass die Stege (15) auf gleicher Höhe liegen.

6. Schwingungsaufnehmer nach einem der Ansprüche 1 bis 5, **dadurch gekennzeichnet, dass**
- die Druckhülse (2) aus Stahl gefertigt ist.

7. Schwingungsaufnehmer nach einem der Ansprüche 1 bis 5, **dadurch gekennzeichnet, dass**
- die Druckhülse (2) aus Messing gefertigt ist.

8. Schwingungsaufnehmer nach einem der Ansprüche 1 bis 5, **dadurch gekennzeichnet, dass**
- die Druckhülse (2) aus Aluminium gefertigt ist.

9. schwingungsaufnehmer als Klopfsensor nach einem der vorhergehenden Ansprüche, **dadurch gekennzeichnet, dass**
- das, die Schwingungen verursachende Bauteil der Motorblock eines Verbrennungsmotors in einem Kraftfahrzeug ist.

## Claims

1. Vibration pick-up with a pressure sleeve, in which the pressure sleeve (2) can be mounted on a vibration-inducing component by direct or indirect fixing, and with a sensor element (6), which is held radially on the outside of the pressure sleeve (2) under an axial preload and can be contacted electrically via contact washers (5, 7) and a terminal part (11), at least one of the contact washers (5, 7) being a sheet-metal part provided with a radial bevel (13), with the result that the at least one contact washer (5, 7) comes to rest in the manner of a Belleville washer between the sensor element (6) and the axially adjoining parts to produce the axial preload, the seismic mass (16) being provided with an internal thread (17) and being capable of being screwed directly onto the pressure sleeve (2) to clamp the sensor element (6).

2. Vibration pick-up according to Claim 1, **characterized in that**
- the at least one contact washer (5, 7) is punched out of a metal sheet and is provided with the radial bevel (13).

3. Vibration pick-up according to Claim 2, **characterized in that**
- the at least one contact washer (5, 7) is punched out of the metal sheet in one piece with a web (14), the web (14) having a thickened portion (15) at its end remote from the respective contact washer (5, 7) to allow it to act as a plug-type terminal (11).

4. Vibration pick-up according to Claim 3, **characterized in that**
- the thickened portion can be produced by crimping over sheet-metal segments.

5. Vibration pick-up according to either of Claims 3 and 4, **characterized in that**
- both contact washers (5, 7) are embodied in an identical manner and are arranged symmetrically to one another in such a way that the webs (15) are at the same level.

6. Vibration pick-up according to one of Claims 1 to 5, **characterized in that**
- the pressure sleeve (2) is manufactured from steel.

7. Vibration pick-up according to one of Claims 1 to 5, **characterized in that**
- the pressure sleeve (2) is manufactured from brass.

8. Vibration pick-up according to one of Claims 1 to 5, **characterized in that**
- the pressure sleeve (2) is manufactured from aluminium.

9. Vibration pick-up as a knock sensor according to one of the preceding claims, **characterized in that**
- the vibration-inducing component is the engine block of an internal combustion engine in a motor vehicle.

## Revendications

1. Capteur d'oscillations comportant une douille de pression (2) installée par une fixation directe ou indirecte sur un organe engendrant des oscillations et un élément de capteur (6), tenu radialement, extérieurement, contre la douille de pression (2) sous une précontrainte axiale, et mis en contact électrique par des rondelles de contact (5, 7) et une pièce de branchement (11),
au moins l'une des rondelles de contact (5, 7) étant une pièce en tôle munie d'une rampe radiale (13) de façon qu'au moins une rondelle de contact (5, 7) vienne entre l'élément de capteur (6) et les pièces axialement adjacentes pour créer la précontrainte axiale,
la masse sismique (16) étant munie d'un filetage intérieur (17) et pouvant se visser directement sur la douille de pression (2) pour serrer l'élément de capteur (6).

2. Capteur d'oscillations selon la revendication 1,
**caractérisé en ce qu'**
au moins une rondelle de contact (5, 7) est emboutie en tôle et comporte une rampe radiale (13).

3. Capteur d'oscillations selon la revendication 2,
**caractérisé en ce qu'**
au moins une rondelle de contact (5, 7) est emboutie en tôle en une seule pièce avec une branche (14), la branche (14) ayant à son extrémité opposée à la rondelle de contact respective (5, 7), une partie renforcée (15) pour fonctionner comme raccord de connecteur (11).

4. Capteur d'oscillations selon la revendication 3,
**caractérisé en ce que**
le renforcement est réalisé par repliage de segments de tôle.

5. Capteur d'oscillations selon l'une quelconque des revendications 3 ou 4,
**caractérisé en ce que**
les deux rondelles de contact (5, 7) sont identiques et installées symétriquement de façon que la branche (14) se trouve à la même hauteur.

6. Capteur d'oscillations selon l'une quelconque des revendications 1 à 5,
**caractérisé en ce que**
la douille de pression (2) est fabriquée en acier.

7. Capteur d'oscillations selon l'une quelconque des revendications 1 à 5,
**caractérisé en ce que**
la douille de pression (2) est fabriquée en laiton.

8. Capteur d'oscillations selon l'une quelconque des revendications 1 à 5,
**caractérisé en ce que**
la douille de pression (2) est en aluminium.

9. Capteur d'oscillations constituant un capteur de cliquetis selon l'une des revendications précédentes,
**caractérisé en ce que**
la pièce engendrant les oscillations est le bloc d'un moteur à combustion interne d'un véhicule automobile.
